# EUROPEAN PATENT SPECIFICATION

(11) **EP 2 692 609 B1**
(45) Date of publication and mention of the grant of the patent: **27.05.2015**
(21) Application number: 13178068.6
(22) Date of filing: 25.07.2013
(51) Int. Cl.: B62B 3/02

(54) **Collapsible roll container**
Zusammenklappbarer Rollbehälter
Conteneur roulant pliable

(30) Priority: 31.07.2012 NL 2009258
(43) Date of publication of application: 05.02.2014
(73) Proprietor: RTI Services B.V., 2771 AE Boskoop (NL)
(72) Inventor: Streng, Ferdinandus Jozef Maria, 2771 AE Boskoop (NL); Jongerius, Johannes Stephanus, 3514 BG Utrecht (NL); Bouwmeester, Rudolph, 2404 NA Alphen aan den Rijn (NL)
(74) Representative: EP&C

(56) References cited:
- BE-A- 520 128
- DE-A1- 10 062 425
- US-A- 3 698 733
- US-A1- 2007 095 257

## Description

The invention relates to a collapsible roll container according to the preamble of claim 1. Such a collapsible roll container may be used to transport goods from a warehouse to a store, and to transport and/or display the goods within the store. Typical goods to be transported and displayed by such a collapsible roll container would be plants and flowers, food products, including potatoes, vegetables, and fruit, as well as non-food articles. After the goods are unloaded from the collapsible roll container, it is collapsed so it takes less space during storage before it is returned to the warehouse and during the return trip.

DE-A1-100.62.425 discloses a trolley with a bottom and two sidepieces. Each sidepiece comprises an upper and a lower sidepiece. In this case, the lower sidepiece comprises two relative short parts which are fixedly connected to the topside of the bottom. The short parts carry pivoting means which enable the upper sidepiece to pivot from a storage position, wherein it lies on the topside of the bottom, to a use position, wherein the upper sidepiece extends upwards. The trolley comprises a lock with a cone and a cavity. The cavity is provided in the lower end of the upper sidepiece. In this case, the cone is provided on a lever, which is connected to an underside of the bottom. The connection comprises a pivot point and a spring, which urges the cone upwards. When the upper sidepiece is pivoted upwards to the use position, the lower end of the upper sidepiece hits the cone and pushes it downwards against the action of the spring. When the upper sidepiece is pivoted fully to the use position, the cone aligns with the cavity, and the spring pushes the cone into the cavitiy. This locks the upper sidepieces so that unwanted downwards pivoting is prevented. The lock is released by pushing the lever with the cone downwards.

The known collapsible roll container has as a problem that it is not reliable. The claimed type of roll container is often used intensively and in an environment where it is handled roughly. The spring may disappear or get damaged as it is located at a vulnerable position, or it may wear out during extended use. Then the cone may drop down due to its own weight, and the lock is involuntarily released.

US-3.698.733 discloses a free standing foldable cart having a rectangular base shelf with a post in each of the four corners and a pair of longitudinally spaced end frames. The posts of each end frame are pivotally connected to a corresponding post of the base shelf for rotation of each end frame about a single axis of rotation to fold the end frames about the base shelf. In the folded position, two or more carts may be vertically stacked upon and moved about the running gear of the bottom cart. A latch system provides a positive control over the rotation movement of the end frames, and is provided in a lower position at the single axis of rotation. The latch system comprises a latch housing with a latch pin which, within the latch housing, is surrounded by a compressive spring which acts at its upper end against the wall of the latch housing and reacts against a roll pin secured to extend radially outward from the pin. Accordingly, the pin is under a constant bias in a downward direction.

The invention aims at providing a collapsible roll container that overcomes at least part of the above disadvantages, or providing a useful alternative. In particular, the invention aims at providing a collapsible roll container which is more reliable.

The invention overcomes the problem by providing a collapsible roll container according to claim 1.

A collapsible roll container comprises a bottom, wheels, at least one sidepiece, comprising an upper sidepiece, a lower sidepiece, and pivoting means, and a lock. The bottom comprises an underside and a topside, and the wheels are connected to the underside of the bottom for rollably supporting the collapsible roll container. The lower sidepiece is connected to the topside of the bottom, and comprises an upper end. The upper sidepiece comprises a lower end, is connected with the pivoting means to the lower sidepiece, extends upwards in a use position, and is pivotable about a pivot axis of the pivoting means downwards from the use position to a storage position. The lock comprises a protrusion, and a matching cavity. The protrusion is connected to one of the lower end of the upper sidepiece and the upper end of the lower sidepiece, and the matching cavity is provided in the other one of the lower end of the upper sidepiece and the upper end of the lower sidepiece, such that the protrusion fits in the matching cavity in the use position to lock the upper sidepiece against a pivoting movement relative to the lower sidepiece in the use position. The pivoting means are designed to allow a translational movement of the lower end of the upper sidepiece relative to the upper end of the lower sidepiece. The lock further comprises a cam and a follower. One of the cam and the follower is fixedly connected to the upper sidepiece and the other one of the cam and the follower is fixedly connected to the lower sidepiece. The cam comprises a cam surface which is engageable by the follower. The cam surface has an increasing and then decreasing distance measured from the pivot axis, such that the follower engaging the cam surface increases a distance between the lower end of the upper sidepiece and the upper end of the lower sidepiece during a last but one part of an upwards pivoting movement to the use position to let the protrusion freely align with the matching cavity, and decreases the distance between the lower end of the upper sidepiece and the upper end of the lower sidepiece during a last part of the upwards pivoting movement to the use position to let the protrusion enter the matching cavity.

When a user pivots the upper sidepiece upwards to the use position, the follower engages the cam. The increasing distance of the cam surface relative to the pivot axis will cause the lower end of the upper sidepiece to move away from the upper end of the lower sidepiece. Thus, the protrusion will stay clear from the other one of the upper sidepiece and lower sidepiece, in particular from an edge around the matching cavity and will come in alignment with the matching cavity. Further pivoting will result the follower in following the decreasing distance part of the cam surface so that the distance between the lower end of the upper sidepiece and the upper end of the lower sidepiece decreases and the protrusion enters the matching cavity. Accordingly, the lock of the inventive collapsible roll container only requires the force of the user, and gravity to work. No spring is required anymore, so the collapsible roll container according to the invention is more reliable than the trolley of DE-A1-100.62.425, and the foldable cart of US-3.698.733.

Preferred embodiments are defined in the dependent claims.

Preferably, the cam is a cam plate, connected fixedly to a side of the respective one of the upper sidepiece or the lower sidepiece and extending beyond the lower end, upper end respectively, and the follower is a projection on the surface of a corresponding side of the other of the upper sidepiece and the lower sidepiece. This offers a simple and solid solution.

In an embodiment, the pivoting means comprise a pivot plate provided with a pivot hole, and a pivot pin, the pivot plate being connected fixedly to a side of one of the upper sidepiece and the lower sidepiece, and extending beyond the lower end, upper end respectively, and the pivot pin being connected to the other one of the upper sidepiece and the lower sidepiece. This offers a simple and solid solution.

Preferably, the pivot hole has a dimension in at least one direction which is larger than an outer diameter of the pivot pin for allowing a rotational and translational movement. More preferably, the pivot hole has a round hole with a diameter larger than the outer diameter of the pivot pin. A pivot hole with such dimensions is a simple way of combining a translational with a pivoting movement.

In a preferred embodiment, the cam plate and the pivot plate are one. Combining the plates is a cost effective solution.

The cam surface ends with a slot, receiving the follower fittingly in the use position of the upper sidepiece. This increases the stiffness of the temporary connection between the upper sidepiece and the lower sidepiece, which was already good thanks to the protrusion and matching cavity.

In an embodiment, the lower end of the upper sidepiece abuts the upper end of the lower sidepiece in the use position of the upper sidepiece. Abutting the ends results in extra stiffness of the temporary connection between the upper sidepiece and the lower sidepiece.

Preferably, the protrusion extends with a protrusion length from the respective lower end of the upper sidepiece or the upper end of the lower sidepiece, to which the protrusion is connected. Such a position of the protrusion minimises the required space for the lock and increases the stiffness of the temporary connection between the upper sidepiece and the lower sidepiece.

More preferably, the distance between the lower end of the upper sidepiece and the upper end of the lower sidepiece is increased to at least the protrusion length during a last but one part of the upwards pivoting movement to the use position. This results in the protrusion staying clear during the pivoting movement.

In an embodiment, the lower sidepiece is connected to the topside of the bottom with a bottom pivot for pivoting the lower sidepiece downwards to the bottom, and upwards to an upwardly extending position. This allows the lower sidepiece to be pivoted too, enabling a sidepiece which is almost twice as high as the corresponding dimension of the bottom on which it is collapsed, while still being collapsible within the boundaries of the bottom.

The invention also relates to the use of a collapsible roll container, as defined in claim 12.

The invention also relates to a method for collapsing a collapsible roll container as defined in claim 13, in particular a collapsible roll container according to one of the above embodiments. In particular the method relates to a folding out, or collapsing a sidepiece of the collapsible roll container from a storage position to a use position.

The method comprises the steps of engaging a follower to a cam, wherein one of the cam and the follower is fixedly connected to an upper sidepiece of a sidepiece of the collapsible roll container, when a user pivots the upper sidepiece upwards towards a user position.

The method further comprises the step of increasing the distance of a cam surface of the cam relative to a pivot axis of the upper sidepiece. This causes a lower end of the upper sidepiece to move away from an upper end of the lower sidepiece. This is done such that a protrusion of one of the lower end the upper sidepiece and the upper end of the lower sidepiece stays clear from the other one of the lower end of the upper sidepiece and the upper end of the lower sidepiece. The protrusion comes in alignment with a matching cavity of the other one of the lower end of the upper sidepiece and the upper end of the lower sidepiece.

In particular, the protrusion stays clear from an edge around the matching cavity.

The method further comprises the step of further pivoting the upper sidepiece upwards resulting in that the follower follows a decreasing distance part of the cam surface relative to the pivot axis. This is done so that the distance between the lower end of the upper sidepiece and the upper end of the lower sidepiece decreases and the protrusion enters the matching cavity.

The method further comprises the step of locking the collapsible roll container by entering the protrusion into the matching cavity.

This is advantageous as it only requires the force of the user, and gravity to lock the collapsible container in the use position.

The invention will be explained in more detail by means of the attached drawing, which show a non-limiting embodiment of the invention, in which:
fig. 1 shows a perspective view of a collapsible roll container, in which the collapsible roll container is in a use position;
fig. 2 shows a perspective view of detail II of fig. 1;
fig. 3 shows a perspective view of the collapsible roll container, in which the collapsible roll container is in a last part of an upwards pivoting movement to the use position to let a protrusion enter a matching cavity;
fig. 4 shows a perspective view of detail IV of fig. 3;
fig. 5 shows a perspective view of detail V of fig. 3;
fig. 6 shows a perspective view of the collapsible roll container, in which the collapsible roll container is in a last but one part of an upwards pivoting movement to the use position to let the protrusion freely align with the matching cavity;
fig. 7 shows a perspective view of detail VII of fig. 6;
fig. 8 shows a perspective view of detail IIX of fig. 6;
fig. 9 shows a perspective view of the collapsible roll container, in which the collapsible roll container is in an intermediate position between the use position and a storage position and is able to freely pivot around a pivoting axis;
fig. 10 shows a perspective view of detail X of fig. 9;
fig. 11 shows a perspective view of the collapsible roll container, in which the collapsible roll container is in the storage position and sides of an upper sidepiece and a lower sidepiece abuts each other;
fig. 12 shows a perspective view of detail XII of fig. 11.

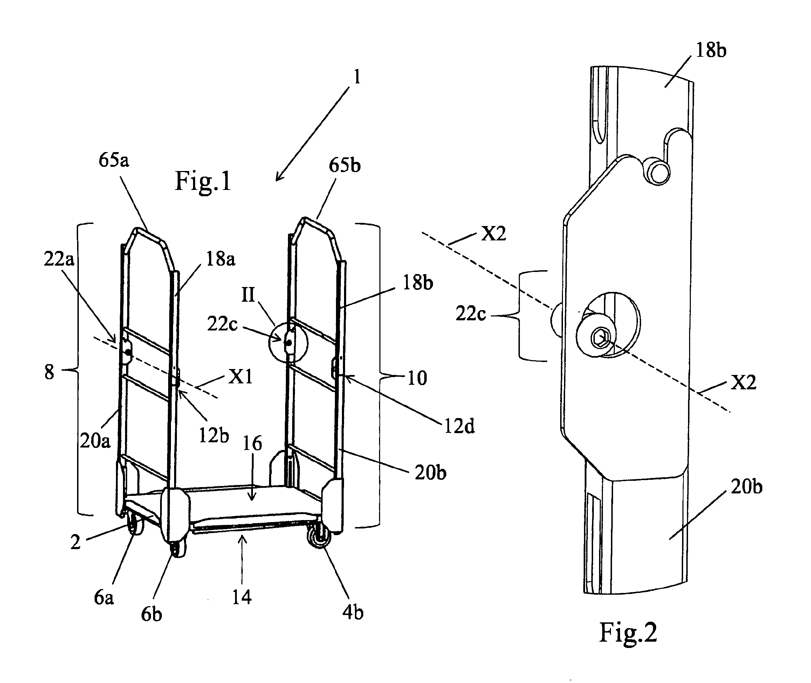

A collapsible roll container according to the invention will be denoted with reference number 1 (fig. 1). The collapsible roll container 1 comprises a bottom 2, two castor wheels 6a, 6b, two fixed wheels 4b, a first sidepiece 8, a second sidepiece 10, and at least one lock 12b, 12d. The bottom 2 comprises an underside 14, and a topside 16. The first sidepiece 8 comprises an upper sidepiece 18a, a lower sidepiece 20a and pivoting means 22a.

The second sidepiece 10, comprises similarly an upper sidepiece 18b, a lower sidepiece 20b and pivoting means 22c.

The castor 4b and fixed 6a, 6b wheels are connected to the underside 14 of the bottom 2 for rollably supporting the collapsible roll container 1.

In this embodiment, the second sidepiece 10 is similar but mirrored with respect to the first sidepiece 8 and preferably comprises the same features as the first sidepiece 8. For convenience, similar features have the same reference numbers, however have a different alphabetic character, e.g. a, b, c or d, in addition to distinguish between one of a feature of the first sidepiece 8 on the one hand and one of a feature of the second sidepiece 10 on the other hand.

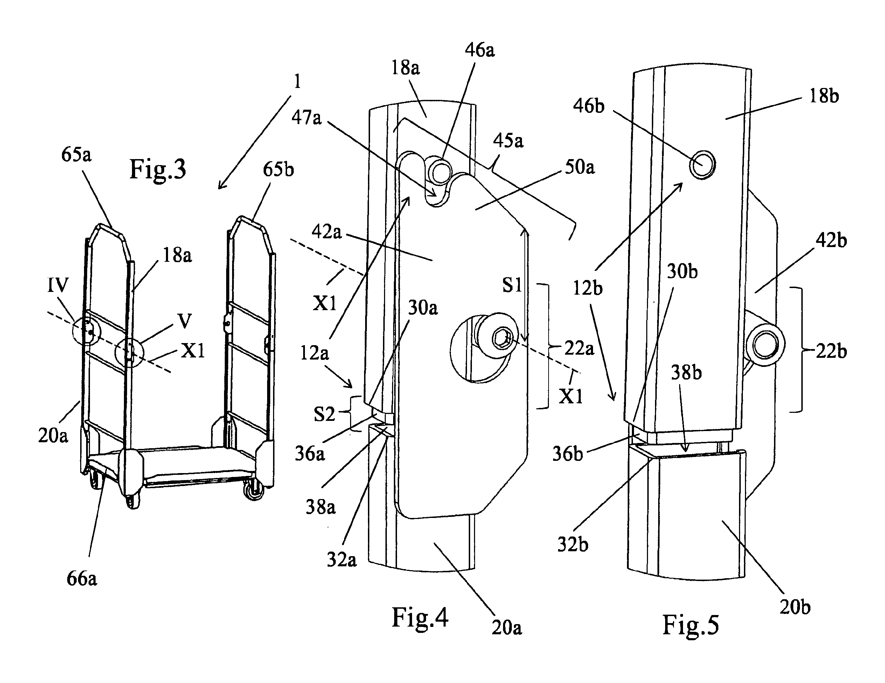

Fig. 2 is a zoomed in perspective view of detail II of fig. 1. Detail II zooms in to the pivoting means 22c of the second sidepiece 10. The shown pivoting means 22c are similar but mirrored to the pivoting means 22a of the first sidepiece 8 and are similar to second pivoting means 22b of the first sidepiece 8 best seen in fig. 5.

The upper sidepieces 18a, 18b extend upwards in a use position, and are pivotable about respectively a pivot axis X1 and a pivot axis X2 of the pivoting means 22a, 22c downwards from the use position (fig. 1) to a storage position.

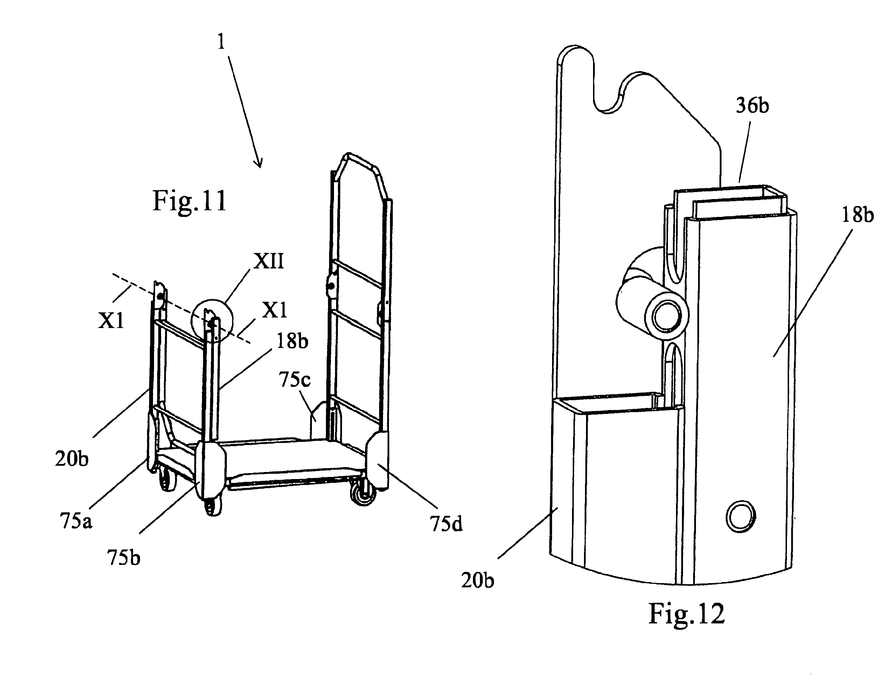

The upper sidepieces 18a, 18b are collapsible with respect to the lower sidepieces 20a, 20b and may be brought in the storage position in which the respective upper sidepieces 18a, 18b abut the lower sidepieces 20a, 20b. This is shown in fig. 11 for the first sidepiece 8.

The respective figures 3, 6 and 9 show only the first sidepiece 8 being collapsed, or folded in, from the usage position to the storage position. Note, that when the steps shown in these figures are performed in reverse, the first sidepiece 8 is reversely collapsed, or folded out, from the storage position to the use position.

The lower sidepieces 20a, 20b are connected to the topside 16 of the bottom 2. This results in the first and second sidepieces 8, 10 being pivotably connected to the bottom 2, by means of respective bottom pivot means, preferably pull-up pivots (not shown in detail). This allows the first- and second sidepieces 8, 10 being collapsible, or folded in, such that a side of one of the respective first- and second sidepieces 8, 10 abuts the topside 16 of the bottom 2 and the side of the other one of the respective first- and second sidepieces 8, 10 abuts the side of the other respective first- and second sidepieces 8, 10. This reduces outer dimensions of the collapsible roll container 1 when in the storage position.

By referring to the said figures 3, 6, 9 and 11 respectively, the collapsing, or folding in, of the upper sidepiece 18a with respect to the lower sidepiece 20a of the first sidepiece 8 is explained in more detail. For convenience, detailed zoomed in perspective views are available for each of the said figures to better show the working of the pivoting means 22a and the lock 12b.

Note, that although only the collapsing of the first sidepiece 8 is shown and described, a similar collapsing is possible and foreseen for the second sidepiece 10.

Fig. 3 shows a perspective view of the collapsible roll container 1, in which the collapsible roll container 1 is in a last part of an upwards pivoting movement to the use position to let a protrusion 36a, 36b enter a matching cavity 38a, 38b. By an upwards pivoting movement is meant the movement to get the upper sidepiece 18a and the lower sidepiece 20a in the use position, or folding out.

Here, the reverse movement is performed, namely a downwards pivoting movement, or folding in, which follows directly after the use position when the first sidepiece 18 is collapsed towards the storage position. Thus, the perspective view of the last part of the upwards pivoting movement is similar to a perspective view of a first part of the downwards pivoting movement.

The locks 12a, 12b and the pivoting means 22a, 22b can be seen in fig. 4 and fig. 5 which are a zoomed in view of respectively detail IV and V of fig. 3. Note again, that similar features have similar reference numbers.

The lower sidepiece 20a comprises an upper end 32a, which is shown fig. 4. A similar second upper end 32b of the lower sidepiece 20a is shown in fig. 5. Note, that the features shown in fig. 4 are similar but mirrored with respect to a substantial vertical imaginary plane.

The upper sidepiece 18a comprises a first lower end 30a and a second lower end 30b, which is also shown is fig. 4 and fig. 5. The upper sidepiece 18a is connected with first pivoting means 22a and second pivoting means 22b to the lower sidepiece 20a.

The locks 12a, 12b each comprises a protrusion 36a, 36b, and a matching cavity 38a, 38b, wherein the protrusion 36a, 36b is connected to the lower end 30a, 30b of the upper sidepiece 18a. The matching cavity 38a, 38b is provided in the upper end 32a, 32b of the lower sidepiece 20a.

The matching cavity 38a, 38b is provided such that the protrusion 36a, 36b fits in the matching cavity 38a, 38b in the use position to lock the upper sidepiece 18a against a pivoting movement relative to the lower sidepiece 20a in the use position.

The locks 12a, 12b each further comprises a cam 42a, 42b and a follower 46a, 46b.

As shown in fig. 4 and 5, the cam 42a, 42b is fixedly connected to the lower sidepiece 20a and the follower 46a, 46b is connected to the upper sidepiece 18a.

As shown in fig. 4, the cam 42a comprises a cam surface 45a which is engageable by the follower 46a.

The cam surface 45a has an increasing and then decreasing distance S1 measured from the pivot axis X1, such that the follower 46a engaging the cam surface 45a increases a distance S2 between the lower end 30a of the upper sidepiece 18a and the upper end 32a of the lower sidepiece 20a during a last but one part of an upwards pivoting movement to the use position to let the protrusion 36a freely align with the matching cavity 38a, and decreases the distance S2 between the lower end 30a of the upper sidepiece 18a and the upper end 32a of the lower sidepiece 20a during a last part of the upwards pivoting movement to the use position to let the protrusion 36a enter the matching cavity 38a.

The cam 42a is a cam plate 50a. The cam plate 50a is connected fixedly to a side of the lower sidepiece 20a and extending beyond upper end 32a respectively. The cam surface 45a is an edge of the cam plate 50a The follower 46a is a projection on the surface of a side of the upper sidepiece 18a.

The cam surface 45a ends with a slot 47a for receiving the follower 46a fittingly in the use position of the upper sidepiece 18a as can be seen best in fig. 2, although for the second sidepiece 10.

As said before, fig. 3 shows the perspective view of the last part of the upwards pivoting movement to the use position, decreasing the distance S2, being the same as the first part of the downwards pivoting movement to the storage position, increasing the distance S2.

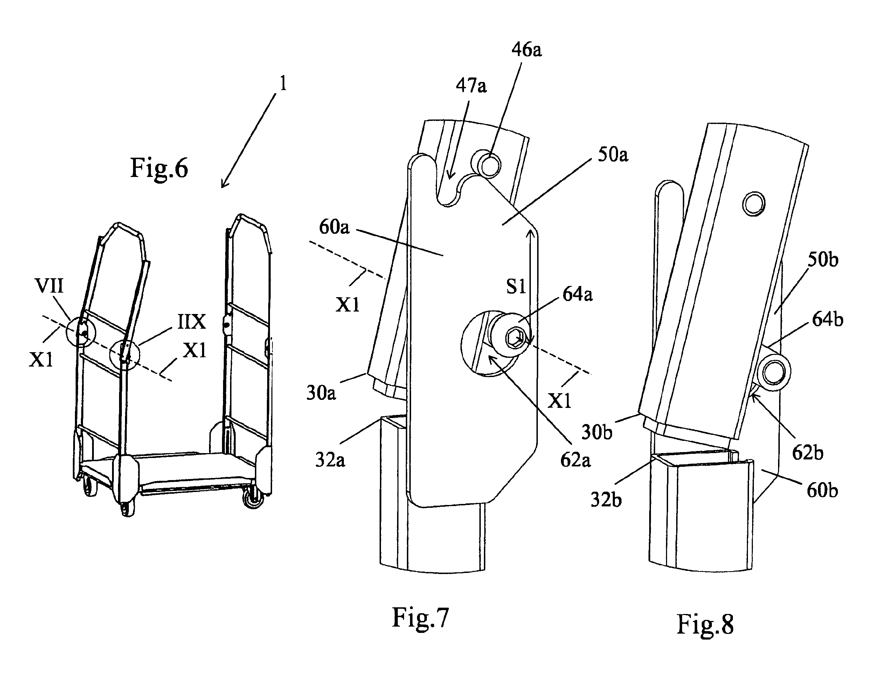

Fig. 6 shows the perspective view of the last but one part of the upwards pivoting movement to the use position to let the protrusion 36a freely align with the matching cavity 38a. This is the same as the part following the first part of the downwards pivoting movement to the storage position. The protrusion 36a is suitable to come freely out of alignment with the matching cavity 38a.

For this purpose, the pivoting means 22a, 22b are designed to allow a translational movement of the lower ends 30a, 30b of the upper sidepiece 18a relative to the upper ends 32a, 32b of the lower sidepiece 20a.

The pivoting means 22a, 22b comprise a pivot plate 60a, 60b provided with a pivot hole 62a, 62b, and a pivot pin 64a, 64b.The pivot plate 60a, 60b is connected fixedly to a side of the lower sidepiece 20a and extending beyond the upper end 32a, 32b respectively. The pivot pin 64a, 64b is being connected to the upper sidepiece 18a.

The pivot hole 62a, 62b has a dimension in at least one direction which is larger than an outer diameter of the pivot pin 64a, 64b for allowing the rotational and the translational movement. In this case, the pivot hole 62a, 62b is a round hole with a diameter larger than the outer diameter of the pivot pin 64a, 64b.

In the collapsible roll container 1 according to the shown embodiment, the cam plate 50a and the pivot plate 60a are one. In other words, the cam plate 50a is also the pivot plate 60a.

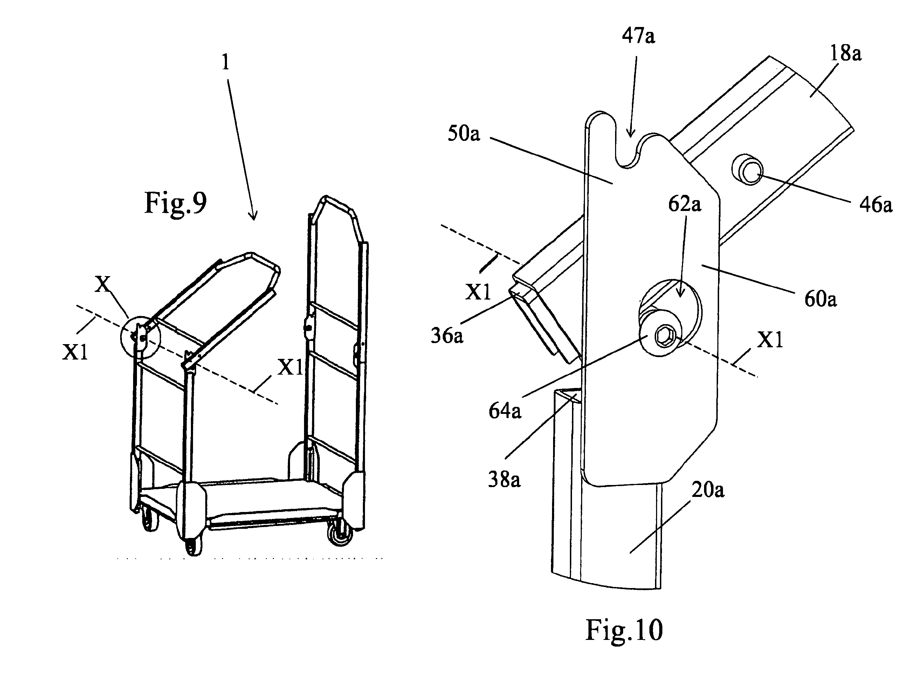

Fig. 9 shows the collapsible roll container 1 in a perspective view wherein the upper sidepiece 18a is freely rotatable about pivot axis X1. The pivot pin 64a is freely movable within the pivot hole 62a as can be seen in fig. 10 which is a perspective view of detail X of fig. 9. Also shown is that the protrusion 36a of the lock 12a is not engaged/entered into the matching cavity 38a. Moreover, the cam 46a is outside of the slot 47a of the cam plate 50a. This allows the upper sidepiece 18a to collapse, or fold in, towards and into the storage position.

The storage position of the collapsible roll container 1 is shown in a perspective view in fig. 11. Fig. 12 shows a perspective view of detail XII of fig. 11. It is shown that a side of the upper sidepiece 18a abuts a side of the lower sidepiece 20a and are arranged parallel with respect to each other.

Referring back to fig. 1, the lower ends 30a, 30b of the upper sidepiece 18a abut the upper ends 32a, 32b of the lower sidepiece 20a in the use position of the upper sidepiece 18a of the first sidepiece 8. Abutting the ends 30a, 30b, 32a, 32b results in extra stiffness of the temporary connection between the upper sidepiece 18a and the lower sidepiece 20a.

The above description describes the features of the collapsible roll container 1.

In use, the sidepieces 8, 10 are collapsible and can either fold in or fold out. Folding in means moving the sidepiece 8,10 from the use position towards the storage position. Folding out means moving the sidepiece 8, 10 from the storage position towards the use position.

In particularly, the invention is advantageous when folding the sidepiece 8, 10 out, thus moving the sidepiece 8,10 from the storage position to the use position.

This can be best seen in fig. 9 and fig. 6, wherein fig. 9 shows the first sidepiece 8 wherein the upper sidepiece 18a is freely rotatable about pivot axis X1. Note, that the follower 46a does not abuts or engages the cam plate 60a which allows for the upper sidepiece 18a to be freely rotatable.

When the upper sidepiece 18a is rotated towards the use position, the follower 46a will engage, or contact, the cam surface 45a, which is the edge of the cam plate 60a.

When the upper sidepiece 18a is rotated even further towards the use position, the follower 46a glides over the cam surface 45a. Because the cam surface 45a has an increasing and then decreasing distance S1 measured from the pivot axis X1, the distance S2 firstly increases between the lower end 30a of the upper sidepiece 18a and the upper end 32a of the lower sidepiece 20a during a last but one part of an upwards pivoting movement to the use position to let the protrusion 36a freely align with the matching cavity 38a, and secondly decreases the distance S2 between the lower end 30a of the upper sidepiece 18a and the upper end 32a of the lower sidepiece 20a during a last part of the upwards pivoting movement to the use position to let the protrusion 36a enter the matching cavity 38a.

This can be seen best in fig. 6 and fig. 7 where the follower 46a engages the cam surface 45a. As can be seen in fig. 7, when the upper sidepiece 18a is rotated towards the use position, the distance S1 between cam surface 45a, that contacts the follower 46a, and the pivot axis X1 increases. During the increasing of the distance S1, the lower end 30a of the upper sidepiece 18a is moved towards an alignment with the upper end 32a of the lower sidepiece 20a. When the upper sidepiece 18a is rotated even further towards the use position, the follower 46a enters the slot 47a, and the distance S1 between the cam surface 45a, that contacts the follower 46a, and the pivot axis X1 decreases, moving the ends 30a, 32a towards each other. Thus, the distance S2 between the ends 30a, 32a decreases and the protrusion 36a enters the matching cavity 38a. This can be seen in fig. 3.

The protrusions 36a, 36b extend with a protrusion length from the respective lower ends 30a, 30b of the upper sidepiece 18a to which the protrusions 36a, 36b are connected. The distance S2 between the lower ends 30a, 30b of the upper sidepiece 18a and the upper ends 32a, 32b of the lower sidepiece 20a is increased to at least the protrusion length during the last but one part of the upwards pivoting movement to the use position (or the part following the first part of the downwards pivoting movement to the storage position).

In the use position as can be seen in fig. 3, at least one sidepiece 8, 10 is pivoted upwards to an upwards pivoted position. This is a substantial vertical position of the respective sidepiece 8, 10. Substantial vertical is defined as an obtuse angle, preferably an angle between 75° and 105°, more preferably an angle between 85° and 95°, between the sidepiece and the main direction of the bottom 2. In an upwards pivoted position, the sidepiece 8, 10 may be used as a push bar and the sidepiece 8, 10 comprises an upper bar 65a, 65b, to support a load on the stackable roll container from sliding away in a horizontal direction, and/or to support shelves. Preferably, the upper bar 65a, 65b is substantially horizontal and suitable for being pushed such that the collapsible roll container 1 rolls over a floor.

Multiple collapsible roll containers 1 in the storage position may be stacked on each other, so as to provide a compact pile of collapsible roll containers 1 during storage and transport. An upper end of corner wheel plates 75a, 75b, 75c, 75d is received in a lower end of the corner wheel plates 75a, 75b, 75c, 75d. Stacking multiple collapsible roll containers 1 in the storage position is very advantageous during storage and transport, as such a stack only requires the floor space of one collapsible roll container 1 in the use position.

Advantageously, the collapsible roll container 1 of this embodiment is also stackable in the use position. The upper bars 65a, 65b of the sidepieces 8, 10 may be received in recesses of the corner wheel plates 75a, 75b, 75c, 75d, preferably at their lower ends, and/or in the underside 14 of the bottom 2. Preferably, the upper bar 65a, 65b is suitable to be received in a U-profile 66a. The U-profile 66a is arranged in the bottom 2 of the collapsible roll container 1.

Several embodiments are possible within the context of the invention, which is limited by the attached claims only.

In alternative embodiments, the bottom may be closed or open, e.g. by incorporating respectively a fixed or a loose bottom plate. The sidepieces may be closed partly or wholly as well. The stackable roll container may comprise only one, or three or four sidepieces.

Although a pull-up pivot for the bottom is preferred, a simple pivot between the sidepieces and the bottom is sufficient to achieve the main effects of the invention. The advantage of having a pivot at all is that the sidepiece remains connected to the bottom in the storage position of the stackable roll container, so that it cannot get lost during storage or transport. The lower sidepiece may be connected in a fixed manner to the bottom as well, especially in case of relative short sidepieces.

The invention is not limited to specific dimensions. However, it is preferred if the breadth is chosen from the range of 40 centimetre to 100 centimetre and if the length is chosen from the range of 60 centimetre to 135 centimetre. In particular, the container has horizontal dimensions according to the euro modules, i.e. 40x60 square centimetre, 60x80 square centimetre, 80x120 square centimetre, and/or 100x120 square centimetre, and/or has dimensions of 135,0x56,5 square centimetre.

Alternatively, the protrusion 36a, 36b of the lock is connected to the upper end 32a, 32b of the lower sidepiece 20. The matching cavity 38a, 38b is then provided in the lower end 30a, 30b of the upper sidepiece 18a.

Alternatively, the cam 42a, 42b is fixedly connected to the upper sidepiece 18a and the follower 46a, 46b is fixedly connected to the lower sidepiece 20a.

Alternatively, the cam plate 50a is connected fixedly to a side of the upper sidepiece 18a and extending beyond the lower end 30a respectively. The follower 46a is a projection on the surface of a corresponding side of the lower sidepiece 20a.

Alternatively, the pivot plate 60a, 60b is connected fixedly to a side of the upper sidepiece 18a, and extending beyond the lower end 30a, 30b respectively, and the pivot pin 64a, 64b being connected to the lower sidepiece 20a.

## Claims

1. Collapsible roll container (1) comprising a bottom (2), wheels (6a, 6b, 4b), at least one sidepiece (8, 10), comprising an upper sidepiece (18a, 18b), a lower sidepiece (20a, 20b), and pivoting means (22a, 22b, 22c), and a lock (12a, 12b, 12c), wherein,
the bottom (2) comprises an underside (14) and a topside (16),
the wheels (6a, 6b, 4b) are connected to the underside (14) of the bottom (2) for rollably supporting the collapsible roll container (1),
the lower sidepiece (20a, 20b) is connected to the topside (16) of the bottom (2), and comprises an upper end (32a, 32b),
the upper sidepiece (18a, 18b) comprises a lower end (30a, 30b), is connected with the pivoting means (22a, 22b, 22c) to the lower sidepiece (20a, 20b), extends upwards in a use position, and is pivotable about a pivot axis (X1, X2) of the pivoting means (22a, 22b, 22c) downwards from the use position to a storage position,
the lock (12a, 12b, 12c) comprises a protrusion (36a, 36b), and a matching cavity (38a, 38b), wherein
the protrusion (36a, 36b) is connected to one of the lower end (30a, 30b) of the upper sidepiece (18a, 18b) and the upper end (32a, 32b) of the lower sidepiece (20a, 20b), and the matching cavity (38a, 38b) is provided in the other one of the lower end (30a, 30b) of the upper sidepiece (18a, 18b) and the upper end (32a, 32b) of the lower sidepiece (20a, 20b), such that the protrusion (36a, 36b) fits in the matching cavity (38a, 38b) in the use position to lock the upper sidepiece (18a, 18b) against a pivoting movement relative to the lower sidepiece (20a, 20b) in the use position, **characterised in that**
the pivoting means (22a, 22b, 22c) are designed to allow a translational movement of the lower end (30a, 30b) of the upper sidepiece (18a, 18b) relative to the upper end (32a, 32b) of the lower sidepiece (20a, 20b),
the lock (12a, 12b, 12c) further comprises a cam (42a, 42b) and a follower (46a, 46b), wherein
one of the cam (42a, 42b) and the follower (46a, 46b) is fixedly connected to the upper sidepiece (18a, 18b) and the other one of the cam (42a, 42b) and the follower (46a, 46b) is fixedly connected to the lower sidepiece (20a, 20b), and
the cam (42a, 42b) comprises a cam surface (45a, 45b) which is engageable by the follower (46a, 46b), which cam surface (45a, 45b) has an increasing and then decreasing distance (S1) measured from the pivot axis (X1, X2), such that the follower (46a, 46b) engaging the cam surface (45a, 45b) increases a distance between the lower end (30a, 30b) of the upper sidepiece (18a, 18b) and the upper end (32a, 32b) of the lower sidepiece (20a, 20b) during a last but one part of an upwards pivoting movement to the use position to let the protrusion (36a, 36b) freely align with the matching cavity (38a, 38b), and decreases the distance (S2) between the lower end (30a, 30b) of the upper sidepiece (18a, 18b) and the upper end (32a, 32b) of the lower sidepiece (20a, 20b) during a last part of the upwards pivoting movement to the use position to let the protrusion (36a, 36b) enter the matching cavity (38a, 38b).

2. Collapsible roll container (1) according to claim 1, wherein the cam (42a, 42b) is a cam plate (50a, 50b), connected fixedly to a side of the respective one of the upper sidepiece (18a, 18b) or the lower sidepiece (20a, 20b) and extending beyond the lower end (30a, 30b), upper end (32a, 32b) respectively, and the follower (46a, 46b) is a projection on the surface of a corresponding side of the other of the upper sidepiece (18a, 18b) and the lower sidepiece (20a, 20b).

3. Collapsible roll container (1) according to claim 1, or 2, wherein the pivoting means (22a, 22b, 22c) comprise a pivot plate (60a, 60b) provided with a pivot hole (62a, 62b), and a pivot pin (64a, 64b), the pivot plate (60a, 60b) being connected fixedly to a side of one of the upper sidepiece (18a, 18b) and the lower sidepiece (20a, 20b), and extending beyond the lower end (30a, 30b), upper end (32a, 32b) respectively, and the pivot pin (64a, 64b) being connected to the other one of the upper sidepiece (18a, 18b) and the lower sidepiece (20a, 20b).

4. Collapsible roll container (1) according to claim 3, the pivot hole (62a, 62b) having a dimension in at least one direction which is larger than an outer diameter of the pivot pin (64a, 64b) for allowing a rotational and translational movement.

5. Collapsible roll container (1) according to claim 4, the pivot hole (62a, 62b) being a round hole with a diameter larger than the outer diameter of the pivot pin (64a, 64b).

6. Collapsible roll container (1) according to claim 2 and any one of claims 3-5, wherein the cam plate (50a, 50b) and the pivot plate (60a, 60b) are one.

7. Collapsible roll container (1) according to any one of the preceding claims, wherein the cam surface (45a, 45b) ends with a slot (47a, 47b), receiving the follower (46a, 46b) fittingly in the use position of the upper sidepiece (18a, 18b).

8. Collapsible roll container (1) according to any one of the preceding claims, wherein the lower end (30a, 30b) of the upper sidepiece (18a, 18b) abuts the upper end (32a, 32b) of the lower sidepiece (20a, 20b) in the use position of the upper sidepiece (18a, 18b).

9. Collapsible roll container (1) according to any one of the preceding claims, wherein the protrusion (36a, 36b) extends with a protrusion length from the respective lower end (30a, 30b) of the upper sidepiece (18a, 18b) or the upper end (32a, 32b) of the lower sidepiece (20a, 20b), to which the protrusion (36a, 36b) is connected.

10. Collapsible roll container (1) according to claim 8 and 9, wherein the distance (S2) between the lower end (30a, 30b) of the upper sidepiece (18a, 18b) and the upper end (32a, 32b) of the lower sidepiece (20a, 20b) is increased to at least the protrusion length during a last but one part of the upwards pivoting movement to the use position.

11. Collapsible roll container (1) according to any one of the preceding claims, wherein the lower sidepiece (20a, 20b) is connected to the topside (16) of the bottom (2) with a bottom pivot for pivoting the lower sidepiece (20a, 20b) downwards to the bottom (2) and upwards to an upwardly extending position.

12. Use of a collapsible roll container (1) according to any of the preceding claims.

13. Method for collapsing a collapsible roll container (1) according to one of the claims 1-11, comprising the steps of:
engaging a follower (46a, 46b) to a cam (42a, 42b), wherein one of the cam (42a, 42b) and the follower (46a, 46b) is fixedly connected to an upper sidepiece(18a, 18b) of a sidepiece (8, 10) of the collapsible roll container (1), when a user pivots the upper sidepiece (18a, 18b) upwards towards a user position;
increasing the distance of a cam surface (45a, 45b) of the cam (42a, 42b) relative to a pivot axis (X1, X2) of the upper sidepiece (18a, 18b) causing a lower end (30a, 30b) of the upper sidepiece (18a, 18b) to move away from an upper end (32a, 32b) of a lower sidepiece (20a, 20b) of the sidepiece (8, 10), such that a protrusion (36a, 36b) of one of the lower end (20a, 20b) of the upper sidepiece (18a, 18b) and the upper end (32a, 32b) of the lower sidepiece (20a, 20b) stays clear from the other one of the lower end (30a, 30b) of the upper sidepiece (18a, 18b) and the upper end (32a, 32b) of the lower sidepiece (20a, 20b), the protrusion (36a, 36b) coming in alignment with a matching cavity (38a, 38b) of said other one of the lower end (30a, 30b) of the upper sidepiece (18a, 18b) and the upper end (32a, 32b) of the lower sidepiece (20a, 20b);
further pivoting the upper sidepiece (18a, 18b) upwards resulting in that the follower (46a, 46b) follows a decreasing distance part (S1) of the cam surface (45a, 45b) relative to the pivot axis (X1, X2) so that the distance (S2) between the lower end (32a, 32b) of the upper sidepiece (20a, 20b) and the upper end (30a, 30b) of the lower sidepiece (20a, 20b) decreases and the protrusion (36a, 36b) enters the matching cavity (38a, 38b);
locking the collapsible roll container (1) by entering the protrusion (36a, 36b) into the matching cavity (38a, 38b).

## Patentansprüche

1. Zusammenklappbarer Rollcontainer (1), umfassend einen Boden (2), Rollen (6a, 6b, 4b), mindestens ein Seitenteil (8, 10), umfassend ein oberes Seitenteil (18a, 18b), ein unteres Seitenteil (20a, 20b), und Schwenkmittel (22a, 22b, 22c), und eine Verriegelung (12a, 12b, 12c), wobei
der Boden (2) eine Unterseite (14) und eine Oberseite (16) umfasst, wobei
die Rollen (6a, 6b, 4b) mit der Unterseite (14) des Bodens (2) verbunden sind, für eine rollbare Unterstützung des zusammenklappbaren Rollcontainers (1),
das untere Seitenteil (20a, 20b) mit der Oberseite (16) des Bodens (2) verbunden ist, und ein oberes Ende (32a, 32b) umfasst,
das obere Seitenteil (18a, 18b) ein unteres Ende (30a, 30b) umfasst, mit den Schwenkmitteln (22a, 22b, 22c) mit dem unteren Seitenteil (20a, 20b) verbunden ist, sich in einer Benutzungsstellung nach oben erstreckt, und um eine Schwenkachse (X1, X2) der Schwenkmittel (22a, 22b, 22c) nach unten von der Benutzungsstellung in eine Lagerposition schwenkbar ist,
die Verriegelung (12a, 12b, 12c) einen Vorsprung (36a, 36b) und einen dazu passenden Hohlraum (38a, 38b) umfasst, wobei
der Vorsprung (36a, 36b) mit Einem des unteren Endes (30a, 30b) des oberen Seitenteils (18a, 18b) und des oberen Endes (32a, 32b) des unteren Seitenteils (20a, 20b) verbunden ist, und der passende Hohlraum (38a, 38b) in dem Anderen des unteren Endes (30a, 30b) des oberen Seitenteils (18a, 18b) und des oberen Endes (32a, 32b) des unteren Seitenteils (20a, 20b) bereitgestellt ist, sodass der Vorsprung (36a, 36b) in der Benutzungsstellung in den passenden Hohlraum (38a, 38b) passt, um das obere Seitenteil (18a, 18b) gegenüber der Schwenkbewegung relativ zu dem unteren Seitenteil (20a, 20b) in der Benutzungsstellung zu verriegeln, **dadurch gekennzeichnet, dass**
die Schwenkmittel (22a, 22b, 22c) eingerichtet sind, eine translatorische Bewegung des unteren Endes (30a, 30b) des oberen Seitenteils (18a, 18b) relativ zu dem oberen Ende (32a, 32b) des unteren Seitenteils (20a, 20b) zu erlauben,
die Verriegelung (12a, 12b, 12c) weiterhin einen Nocken (42a, 42b) und einen Nockenfolger (46a, 46b) umfasst, wobei
Eines der Nocken (42a, 42b) und des Nockenfolgers (46a, 46b) fest mit dem oberen Seitenteil (18a, 18b) verbunden ist, und das Andere der Nocken (42a, 42b) und des Nockenfolger (46a, 46b) fest mit dem unteren Seitenteil (20a, 20b) verbunden ist, und
die Nocken (42a, 42b) eine Nockenlaufbahn (45a, 45b) umfasst, die durch den Nockenfolger(46a, 46b) angreifbar ist, wobei die Nockenlaufbahn (45a, 45b) einen zunehmenden und einen danach abnehmenden von der Schwenkachse (X1, X2) aus gemessenen Abstand (S1) hat, so dass der mit der Nockenlaufbahn (45a, 45b) in Eingriff stehende Nockenfolger (46a, 46b) einen Abstand zwischen dem unteren Ende (30a, 30b) des oberen Seitenteils (18a, 18b) und dem oberen Ende (32a, 32b) des unteren Seitenteils (20a, 20b) während eines vorletzten Teils einer Schwenkbewegung nach oben in die Benutzungsstellung vergrößert, um den Vorsprung (36a, 36b) mit dem passenden Hohlraum (38a, 38b) frei ausrichten zu lassen, und den Abstand (S2) zwischen dem unteren Ende (30a, 30b) des oberen Seitenteils (18a, 18b) und dem oberen Ende (32a, 32b) des unteren Seitenteils (20a, 20b) während eines letzten Teils der Schwenkbewegung nach oben in die Benutzungsstellung verringert, damit der Vorsprung (36a, 36b) in den passenden Hohlraum (38a, 38b) eintritt.

2. Zusammenklappbarer Rollcontainer (1) nach Anspruch 1, wobei die Nocken (42a, 42b) eine Nockenplatte (50a, 50b) ist, die fest mit einer Seite der entsprechenden Seite des oberen Seitenteils (18a, 18b) oder des unteren Seitenteils (20a, 20b) verbunden ist und sich über das untere Ende (30a, 30b) bzw. über das obere Ende (32a, 32b) verlängert, und der Vorsprung (46a, 46b) eine Projektion auf der Oberfläche einer entsprechenden Seite des anderen oberen Seitenteils (18a, 18b) und des unteren Seitenteils (20a, 20b) ist.

3. Zusammenklappbarer Rollcontainer (1) nach Anspruch 1 oder 2, wobei die Schwenkmittel (22a, 22b, 22c) eine Schwenkplatte (60a, 60b) versehen mit einem Gelenkloch (62a, 62b), und einen Gelenkbolzen (64a, 64b) umfassen, wobei die Schwenkplatte (60a, 60b) fest mit einer Seite des einen oberen Seitenteils (18a, 18b) und des unteren Seitenteils (20a, 20b) verbunden ist, und sich über das untere Ende (30a, 30b) bzw. das obere Ende (32a, 32b) hinaus verlängert, und der Gelenkbolzen (64a, 64b) mit dem anderen oberen Seitenteil (18a, 18b) und dem unteren Seitenteil (20a, 20b) verbunden ist.

4. Zusammenklappbarer Rollcontainer (1) nach Anspruch 3, wobei das Gelenkloch (62a, 62b) in zumindest eine Richtung eine Größe, die größer ist als ein Außendurchmesser des Gelenkbolzens (64a, 64b), aufweist, um eine Schwenkbewegung und eine translatorische Bewegung zu erlauben.

5. Zusammenklappbarer Rollcontainer (1) nach Anspruch 4, wobei das Gelenkloch (62a, 62b) ein rundes Loch mit einem Durchmesser größer als der Außendurchmesser des Gelenkbolzens (64a, 64b) ist.

6. Zusammenklappbarer Rollcontainer (1) nach Anspruch 2 und einem der Ansprüche 3-5, wobei die Nockenplatte (50a, 50b) und die Schwenkplatte (60a, 60b) eins sind.

7. Zusammenklappbarer Rollcontainer (1) nach einem der vorhergehenden Ansprüche, wobei die Nockenlaufbahn (45a, 45b) mit einem Spalt (47a, 47b) abschließt, wobei die Nockenlaufbahn den Nockenfolger (46a, 46b) in der Benutzungsstellung des oberen Seitenteils (18a, 18b) passend aufnimmt.

8. Zusammenklappbarer Rollcontainer (1) nach einem der vorhergehenden Ansprüche, wobei das untere Ende (30a, 30b) des oberen Seitenteils (18a, 18b) an dem unteren Ende (32a, 32b) des unteren Seitenteils (20a, 20b) in der Benutzungsstellung des unteren Seitenteils (18a, 18b) anliegt.

9. Zusammenklappbarer Rollcontainer (1) nach einem der vorhergehenden Ansprüche, wobei der Vorsprung (36a, 36b) sich mit einer Vorsprungslänge von dem entsprechenden unteren Ende (30a, 30b) des oberen Seitenteils (18a, 18b) oder des oberen Endes (32a, 32b) des unteren Seitenteils (20a, 20b) erstreckt, mit dem der Vorsprung (36a, 36b) verbunden ist.

10. Zusammenklappbarer Rollcontainer (1) nach Anspruch 8 und 9, wobei der Abstand (S2) zwischen dem unteren Ende (30a, 30b) des oberen Seitenteils (18a, 18b) und des oberen Endes (32a, 32b) des unteren Seitenteils (20a, 20b) auf zumindest die Vorsprungslänge während eines vorletzten Teils der Schwenkbewegung nach oben in die Benutzungsstellung vergrößert wird.

11. Zusammenklappbarer Rollcontainer (1) nach einem der vorhergehenden Ansprüche, wobei das untere Seitenteil (20a, 20b) mit einer Oberseite (16) des Bodens (2) mit einem unteren Schwenkpunkt verbunden ist, zum Schwenken des unteren Seitenteils (20a, 20b) nach unten zum Boden (2) und nach oben zu einer nach oben verlaufenden Position.

12. Verwendung eines zusammenklappbaren Rollcontainers (1) nach einem der vorhergehenden Ansprüche.

13. Verfahren zum Zusammenklappen eines zusammenklappbaren Rollcontainers (1) nach einem der Ansprüche 1-11, das die folgenden Schritte umfasst:
In-Eingriff-Bringen eines Nockenfolgers (46a, 46b) mit einer Nocken (42a, 42b), wobei Eines der Nocken (42a, 42b) und des Nockenfolgers (46a, 46b) fest mit einem oberen Seitenteil (18a, 18b) eines Seitenteils (8, 10) des zusammenklappbaren Rollcontainers (1) verbunden ist, wenn ein Benutzer das obere Seitenteil (18a, 18b) nach oben hin zu einer Benutzerposition schwenkt;
Vergrößern des Abstands einer Nockenlaufbahn (45a, 45b) der Nocken (42a, 42b) relativ zu einer Schwenkachse (X1, X2) des oberen Seitenteils (18a, 18b), was bewirkt, dass sich ein unteres Ende (30a, 30b) des oberen Seitenteils (18a, 18b) von einem oberen Ende (32a, 32b) eines unteren Seitenteils (20a, 20b) des Seitenteils (8, 10) wegbewegt, so dass ein Vorsprung (36a, 36b) einer der unteren Enden (20a, 20b) des oberen Seitenteils (18a, 18b) und des oberen Endes (32a, 32b) des unteren Seitenteils (20a, 20b) des anderen unteren Endes (30a, 30b) des oberen Seitenteils (18a, 18b) und das obere Ende (32a, 32b) des unteren Seitenteils (20a, 20b) fernbleibt, der Vorsprung (36a, 36b) bündig mit einem passenden Hohlraum (38a, 38b) des anderen unteren Endes (30a, 30b) des oberen Seitenteils (18a, 18b) und des oberen Endes (32a, 32b) des unteren Seitenteils (20a, 20b) abschließt;
weiteres Schwenken des oberen Seitenteils (18a, 18b) was zur Folge hat, dass der Vorsprung (46a, 46b) einem kleiner werdenden Abstandsteil (S1) der Nockenlaufbahn (45a, 45b) relativ zu der Schwenkachse (X1, X2) folgt, so dass der Abstand (S2) zwischen dem unteren Ende (32a, 32b) des oberen Seitenteils (20a, 20b) und dem oberen Ende (30a, 30b) des unteren Seitenteils (20a, 20b) abnimmt und der Vorsprung (36a, 36b) in den passenden Hohlraum (38a, 38b) eintritt;
Verriegeln des zusammenklappbaren Rollcontainers (1) durch Eintreten des Vorsprungs (36a, 36b) in den passenden Hohlraum (38a, 38b).

## Revendications

1. Conteneur roulant pliable (1) comprenant un fond (2), des roues (6a, 6b, 4b), au moins une pièce latérale (8, 10), comprenant une pièce latérale supérieure (18a, 18b), une pièce latérale inférieure (20a, 20b), et des moyens de pivotement (22a, 22b, 22c) et un verrou (12a, 12b, 12c), dans lequel :
le fond (2) comprend un côté inférieur (14) et un côté supérieur (16),
les roues (6a, 6b, 6c) sont raccordées au côté inférieur (14) du fond (2) pour supporter en rotation le conteneur roulant pliable (1),
la pièce latérale inférieure (20a, 20b) est raccordée au côté supérieur (16) du fond (2), et comprend une extrémité supérieure (32a, 32b),
la pièce latérale supérieure (18a, 18b) comprend une extrémité inférieure (30a, 30b), est raccordée avec les moyens de pivotement (22a, 22b, 22c) à la pièce latérale inférieure (20a, 20b), s'étend vers le haut dans une position d'utilisation et peut pivoter autour d'un axe de pivot (X1, X2) des moyens de pivotement (22a, 22b, 22c) vers le bas à partir de la position d'utilisation jusqu'à une position de stockage,
le verrou (12a, 12c, 12c) comprend une saillie (36a, 36b) et une cavité (38a, 38b) correspondante, dans lequel :
la saillie (36a, 36b) est raccordée à l'une parmi l'extrémité inférieure (30a, 30b) de la pièce latérale supérieure (18a, 18b) et l'extrémité supérieure (32a, 32b) de la pièce latérale inférieure (20a, 20b), et la cavité (38a, 38b) correspondante est prévue dans l'autre parmi l'extrémité inférieure (30a, 30b) de la pièce latérale supérieure (18a, 18b) et l'extrémité supérieure (32a, 32b) de la pièce latérale inférieure (20a, 20b), de sorte que la saillie (36a, 36b) s'adapte dans la cavité (38a, 38b) correspondante dans une position d'utilisation afin de verrouiller la pièce latérale supérieure (18a, 18b) contre un mouvement pivotant par rapport à la pièce latérale inférieure (20a, 20b) dans la position d'utilisation, **caractérisé en ce que** :
les moyens de pivotement (22a, 22b, 22c) sont conçus pour permettre un mouvement de translation de l'extrémité inférieure (30a, 30b) de la pièce latérale supérieure (18a, 18b) par rapport à l'extrémité supérieure (32a, 32b) de la pièce latérale inférieure (20a, 20b),
le verrou (12a, 12b, 12c) comprend en outre une came (42a, 42b) et un poussoir (46a, 46b), dans lequel :
l'un parmi la came (42a, 42b) et le poussoir (46a, 46b) est raccordé de manière fixe à la pièce latérale supérieure (18a, 18b) et l'autre parmi la came (42a, 42b) et le poussoir (46a, 46b) est raccordé de manière fixe à la pièce latérale inférieure (20a, 20b), et
la came (42a, 42b) comprend une surface de came (45a, 45b) qui peut être mise en prise par le poussoir (46a, 46b), laquelle surface de came (45a, 45b) a une distance croissante et ensuite décroissante (S1) mesurée à partir de l'axe de pivot (X1, X2), de sorte que le poussoir (46a, 46b) mettant en prise la surface de came (45a, 45b) augmente une distance entre l'extrémité inférieure (30a, 30b) de la pièce latérale supérieure (18a, 18b) et l'extrémité supérieure (32a, 32b) de la pièce latérale inférieure (20a, 20b) pendant l'avant-dernière partie d'un mouvement de pivotement ascendant jusqu'à la position d'utilisation pour laisser la saillie (36a, 36b) s'aligner librement avec la cavité (38a, 38b) correspondante et diminue la distance (S2) entre l'extrémité inférieure (30a, 30b) de la pièce latérale supérieure (18a, 18b) et l'extrémité supérieure (32a, 32b) de la pièce latérale inférieure (20a, 20b) pendant une dernière partie du mouvement de pivotement ascendant jusqu'à la position d'utilisation pour laisser la saillie (36a, 36b) entrer dans la cavité (38a, 38b) correspondante.

2. Conteneur roulant pliable (1) selon la revendication 1, dans lequel la came (42a, 42b) est une plaque de came (50a, 50b), raccordée fixement à un côté d'une pièce respective par la pièce latérale supérieure (18a, 18b) ou la pièce latérale inférieure (20a, 20b) et s'étendant respectivement au-delà de l'extrémité inférieure (30a, 30b), de l'extrémité supérieure (32a, 32b), et le poussoir (46a, 46b) est une saillie sur la surface d'un côté correspondant de l'autre parmi la pièce latérale supérieure (18a, 18b) et la pièce latérale inférieure (20a, 20b).

3. Conteneur roulant pliable (1) selon la revendication 1 ou 2, dans lequel les moyens de pivotement (22a, 22b, 22c) comprennent une plaque de pivot (60a, 60b) prévue avec un trou de pivot (62a, 62b) et une broche de pivot (64a, 64b), la plaque de pivot (60a, 60b) étant raccordée fixement à un côté de l'une parmi la pièce latérale supérieure (18a, 18b) et la pièce latérale inférieure (20a, 20b), et s'étendant respectivement au-delà de l'extrémité inférieure (30a, 30b), de l'extrémité supérieure (32a, 32b), et la broche de pivot (64a, 64b) étant raccordée à l'autre parmi la pièce latérale supérieure (18a, 18b) et la pièce latérale inférieure (20a, 20b).

4. Conteneur roulant pliable (1) selon la revendication 3, le trou de pivot (62a, 62b) ayant une dimension dans au moins une direction qui est supérieure à un diamètre externe de la broche de pivot (64a, 64b) pour permettre un mouvement de rotation et de translation.

5. Conteneur roulant pliable (1) selon la revendication 4, le trou de pivot (62a, 62b) étant un trou rond avec un diamètre supérieur au diamètre externe de la broche de pivot (64a, 64b).

6. Conteneur roulant pliable (1) selon la revendication 2 et l'une quelconque des revendications 3 à 5, dans lequel la plaque de came (50a, 50b) et la plaque de pivot (60a, 60b) ne font qu'une.

7. Conteneur roulant pliable (1) selon l'une quelconque des revendications précédentes, dans lequel la surface de came (45a, 45b) se termine par une fente (47a, 47b), recevant le poussoir (46a, 46b) de manière ajustée dans la position d'utilisation de la pièce latérale supérieure (18a, 18b).

8. Conteneur roulant pliable (1) selon l'une quelconque des revendications précédentes, dans lequel l'extrémité inférieure (30a, 30b) de la pièce latérale supérieure (18a, 18b) vient en butée contre l'extrémité supérieure (32a, 32b) de la pièce latérale inférieure (20a, 20b) dans la position d'utilisation de la pièce latérale supérieure (18a, 18b).

9. Conteneur roulant pliable (1) selon l'une quelconque des revendications précédentes, dans lequel la saillie (36a, 36b) s'étend avec une longueur de saillie à partir de l'extrémité inférieure (30a, 30b) respective de la pièce latérale supérieure (18a, 18b) ou de l'extrémité supérieure (32a, 32b) de la pièce latérale inférieure (20a, 20b), à laquelle la saillie (36a, 36b) est raccordée.

10. Conteneur roulant pliable (1) selon la revendication 8 et 9, dans lequel la distance (S2) entre l'extrémité inférieure (30a, 30b) de la pièce latérale supérieure (18a, 18b) et l'extrémité supérieure (32a, 32b) de la pièce latérale inférieure (20a, 20b) est augmentée au moins jusqu'à la longueur de saillie pendant une avant-dernière partie du mouvement de pivotement ascendant jusqu'à la position d'utilisation.

11. Conteneur roulant pliable (1) selon l'une quelconque des revendications précédentes, dans lequel la pièce latérale inférieure (20a, 20b) est raccordée au côté supérieur (16) du fond (2) avec un pivot de fond pour faire pivoter la pièce latérale inférieure (20a, 20b) vers le bas jusqu'au fond (2) et vers le haut dans une position s'étendant vers le haut.

12. Utilisation d'un conteneur roulant pliable (1) selon l'une quelconque des revendications précédentes.

13. Procédé pour plier un conteneur roulant pliable (1) selon l'une des revendications 1 à 11, comprenant les étapes consistant à :
mettre en prise un poussoir (46a, 46b) sur une came (42a, 42b), dans lequel l'un parmi la came (42a, 42b) et le poussoir (46a, 46b) est raccordé fixement à une pièce latérale supérieure (18a, 18b) d'une pièce latérale (8, 10) du conteneur roulant pliable (1), lorsqu'un utilisateur fait pivoter la pièce latérale supérieure (18a, 18b) vers le haut vers une position d'utilisateur ;
augmenter la distance d'une surface de came (45a, 45b) de la came (42a, 42b) par rapport à un axe de pivot (X1, X2) de la pièce latérale supérieure (18a, 18b) amenant une extrémité inférieure (30a, 30b) de la pièce latérale supérieure (18a, 18b) à s'éloigner d'une extrémité supérieure (32a, 32b) d'une pièce latérale inférieure (20a, 20b) de la pièce latérale (8, 10) de sorte qu'une saillie (36a, 36b) de l'une parmi l'extrémité inférieure (20a, 20b) de la pièce latérale supérieure (18a, 18b) et l'extrémité supérieure (32a, 32b) de la pièce latérale inférieure (20a, 20b) reste dépourvue de l'autre parmi l'extrémité inférieure (30a, 30b) de la pièce latérale supérieure (18a, 18b) et l'extrémité supérieure (32a, 32b) de la pièce latérale inférieure (20a, 20b), la saillie (36a, 36b) venant en alignement avec une cavité (38a, 38b) correspondante de ladite autre parmi l'extrémité inférieure (30a, 30b) de la pièce latérale supérieure (18a, 18b) et l'extrémité supérieure (32a, 32b) la pièce latérale inférieure (20a, 20b) ;
continuer à faire pivoter la pièce latérale supérieure (18a, 18b) vers le haut, ce qui se traduit par le fait que le poussoir (46a, 46b) suit une partie de distance décroissante (S1) de la surface de came (45a, 45b) par rapport à l'axe de pivot (X1, X2) de sorte que la distance (S2) entre l'extrémité inférieure (32a, 32b) de la pièce latérale supérieure (20a, 20b) et l'extrémité supérieure (30a, 30b) de la pièce latérale inférieure (20a, 20b) diminue et la saillie (36a, 36b) pénètre dans la cavité (38a, 38b) correspondante ;
verrouiller le conteneur roulant pliable (1) en faisant entrer la saillie (36a, 36b) dans la cavité (38a, 38b) correspondante.
